Europäisches Patentamt

European Patent Office

Office européen des brevets

(11) Publication number: **0 215 604**
**A2**

# EUROPEAN PATENT APPLICATION

(21) Application number: **86306750.0**

(22) Date of filing: **02.09.86**

(51) Int. Cl.⁴: **G 11 B 20/02**
**G 11 B 20/10, H 04 N 5/782**
**// G06F15/42**

(30) Priority: **11.09.85 AU 2379/85**

(43) Date of publication of application:
**25.03.87 Bulletin 87/13**

(84) Designated Contracting States:
**AT BE CH DE FR GB IT LI LU NL SE**

(71) Applicant: **ROYAL CHILDREN'S HOSPITAL**
**Flemington Road**
**Parkville Victoria 3052 (AU)**

(72) Inventor: **Wall, Ronald Edward**
**79 Bowen Street**
**Chadstone Victoria (AU)**

**Newman, Richard Gerard**
**11 Eric Avenue**
**Lower Templestowe Victoria (AU)**

(74) Representative: **Spall, Christopher John et al**
**BARKER, BRETTELL & DUNCAN 138 Hagley Road**
**Edgbaston Birmingham B16 9PW (GB)**

(54) **Video and analogue data recording system.**

(57) A system and method of recording and playing back two different signals such as a video signal and an analogue signal representing biological data is disclosed in which a processor 14 receives the analogue signal from a patient and a video signal from a camera 10 and combines the two signals into a single stream of data. The processor 14 includes a system controller 60 which causes the analogue signal to be inserted in synchronism with the video signal into the video signal so that the analogue signals are contained in the picture information between picture frames of the video information. The single stream of data is outputted to a video recorder where the data is recorded on a convention video cassette. Upon playback the analogue signal is stripped from the combined signal and is outputted to an analogue recorder 22, 24 and the video signal is applied to a video monitor 32.

fig.1.

EP 0 215 604 A2

**Description**

VIDEO AND ANALOGUE DATA RECORDING SYSTEM

This invention relates to an apparatus for recording at least two signals from different sources on a single recording medium such as a video cassette recorder. The invention has particular application, but is not limited to, the recording of video and analogue data, such as standard colour video and EEG data, onto a video cassette so that the signals recorded on the video cassette can be played back at will for use in medical diagnosis.

It is recognized that in the diagnosis, study and/or treatment of epilepsy, a neurologist is aided by both video pictures of a patient as well as EEG data received from that patient. Existing systems for providing video information and EEG data all suffer from a number of problems including problems concerned with synchronizing the video data and the EEG data. In one known system a video recorder is used to store a picture of the patient and a standard EEG machine is continuously run to produce a paper chart recording of the EEG data. This system is cumbersome and expensive when used for long term recording and vast quantities of expensive recording paper are used in order to secure a hard copy recording of relatively brief events.

In another known system one camera is permanently focused on a paper printout of an EEG machine, whilst a second is focused on a patient. The video outputs of each camera are electronically mixed and recorded as a split screen image on a standard video recorder. This system, although simple, has a number of major disadvantages in that it is not possible to obtain a hard copy of the EEG upon playback and quality of the EEG tracing is poor and is generally not considered to be suitable for diagnosis.

Another known system uses a single video tape recorder to store both video and EEG data. The video data is stored in the conventional way and the EEG data is frequency-divisional multiplexed, with FM subcarriers, onto a sound track or sound tracks. The major disadvantage of this system is a practical limitation in the number of EEG channels per sound track.

In a further system, video data is stored on a standard video recorder, and multiple channels of EEG data are stored on a separate instrumentation recorder with one EEG channel per instrumentation recorder channel. The disadvantages of this system are that it is difficult to synchronize the picture and EEG data, that is, it is difficult for the user to match up a given EEG record with the relevant video data. Furthermore, instrumentation recorders are very expensive and difficult for clinical staff to operate. In this system two tapes are required for each record, a video tape and a tape from the instrumentation recorder.

Another known system is less expensive and more convenient to operate than the system described above and includes one video recorder for the video data and the second video recorder for the EEG data. Multiple channels of EEG data are multiplexed, converted into a video style of format and stored on the second recorder. The second recorder, therefore, is acting as a low cost instrumentation recorder. This system also suffers from the difficulty of synchronizing the video and EEG data. One way around this problem is to use an audio time code generator and store the time of day on one of the audio tracks. Still, the system is cumbersome to operate with two recorders.

The object of this invention is to provide a system in which at least two signals from different sources can be recorded on the same recording medium so that the two signals can be played back and viewed without difficulty in synchronizing the data associated with the two signals whilst enabling the system to be easily operated and relatively inexpensive to purchase.

The invention provides a system for recording analogue information together with picture information received from separate sources, comprising a processor for receiving the picture information from a video camera and for receiving said analogue information, said processor having means for combining said picture information and analogue information being located between picture frames of said picture information, output means for outputting said single stream of data to a recorder for recording said single stream of data on a recording medium, receiving means for receiving said single stream of data from the recorder and for separating said analogue information from said single stream of data and second and third outputting means for outputting said picture information to a video monitor and for outputting said analogue information to an analogue recorder or display respectively.

The invention also provides a method of recording analogue information together with picture information received from separate sources, comprising the steps of combining the picture information and analogue information into a single stream of data with said analogue information being located between picture frames of said picture information, recording said single stream of data on a recording medium for storage, receiving said single stream of data from said recording medium and separating the analogue information from said single stream of data and applying the analogue information to an analogue recorder and the picture information to the video monitor.

The invention also provides a system for recording and retrieving two signals from separate sources comprising means for combining the two signals into a single stream of data, means for outputting the single stream of data to a recorder where the single stream of data is recorded on a recording medium, means for receiving the single stream of data from the recording medium and means for separating at least one of the signals from the single stream of data so that the said one of the signals can be applied to a recorder or display and the other of the signals can be applied to another recorder or display.

The invention also provides a diagnostic system for diagnosing a patient, said system comprising a processor for receiving biological information in the form of an analogue signal from the patient and for receiving video information of the patient from a video camera, means for combining the biological analogue signals and the video signals into a single stream of data, recording means for recording the single stream of data on a recording medium, recovery means for receiving the single stream of data from the recording means and for separating the biological analogue signal from the single stream of data, an analogue recorder or display for recording the analogue information separated from the single stream of data and a video monitor for receiving said video information and for displaying that information.

Since this invention enables data from two separate sources to be combined into a single stream of data and recorded on a single recording medium, the data from the two sources are synchronized in time so that data from one of the sources is matched up with the data from the other of the sources. Furthermore, since the apparatus includes a single recording medium to record the data from the separate sources the apparatus is relatively inexpensive to produce and is easy to operate.

Preferably the apparatus enables playback of the data recorded on the recording medium and includes means for receiving the data from the recording medium, means for separating the data from the first source from the data from the second source and means for displaying the data from each source on one or more display devices.

Preferably the data from the first source comprises video data received from a video camera and the data from the second source comprises biological data received from a patient, said biological data being converted into video format and being inserted into said video data received from the video camera such that the converted biological data does not overlap with the video data and said video data with the converted biological data therein is applied in a single stream to a video cassette for recording the single stream of data. In some circumstances it may be desirable for the biological data to overlap with the video data and therefore in other embodiments the video data and biological data can overlap. In this embodiment a small amount of the picture information can be dispersed with to make way for the biological data.

Preferably the converted biological data is inserted into a plurality of otherwise blank lines of a field of video data, said biological data corresponding to the video data in that field.

The preferred embodiment of the invention may also include the incorporation of audio data onto the recording medium as well as event marker data to record events of particular importance and time information on the recording medium.

A preferred embodiment of the invention will be described with further detail with reference to the accompanying drawings in which:

    Figure 1 is a block diagram of an apparatus embodying the invention;

    Figure 2a and 2b are diagrams showing the sampling and combining of data from two different sources;

    Figure 3 is a diagram showing processing of data;

    Figure 4 is a further diagram showing the combining of the data from the separate sources; and

    Figure 5 is a detailed block diagram of a processor for processing and replaying the data from the separate sources.

The preferred embodiment of the invention will be described with reference to the use of biological data and video data which can be used in the diagnosis, study or treatment of epilepsy or the like. However, it should be understood that the invention is not limited to use with video and biological data.

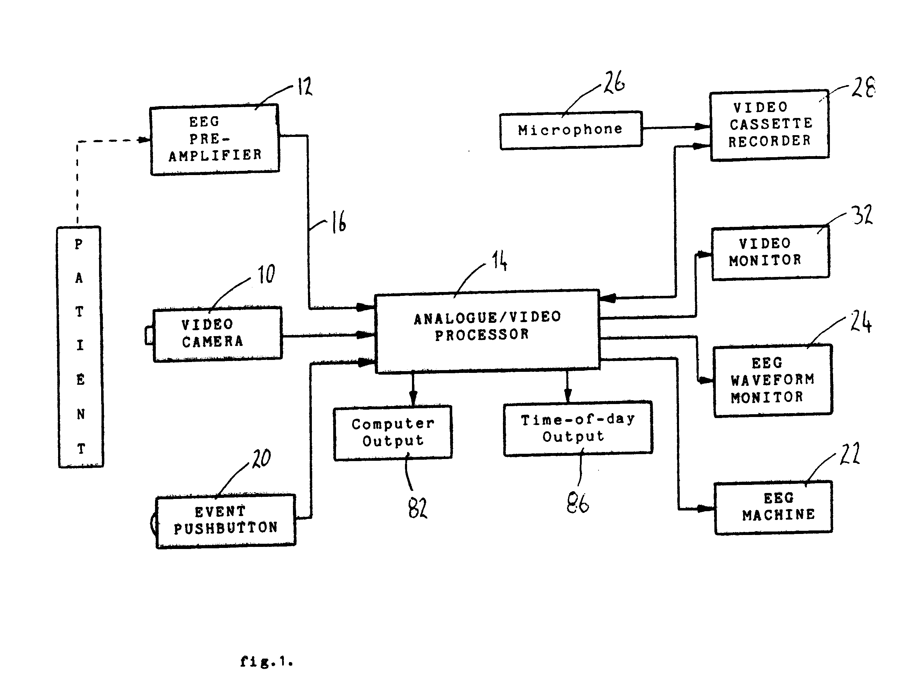

In Figure 1 a video camera 10 is used to provide video data of a patient. Low level EEG signals from electrodes on a patient's scalp are applied to a multi-channel EEG preamplifier 12. Preferably the amplifier 12 is worn by the patient to minimise the cable length between the electrodes on the patient's scalp and the preamplifier to minimise noise. The EEG preamplifier 12 can include either 20 monopolar EEG channels or 16 bipolar EEG channels, each with 75 Hz bandwidth and output of -/+ 1 volt. The preamplifier may also include auxiliary inputs for other biological signals, for example, ECG, respiration, movement detection etc. The video camera 10 and the EEG preamplifier 12 are connected to an analogue/video processor 14 by cables 16 and 18. In other embodiments the other biological signals may be applied directly to processor 14 thereby bypassing preamplifier 12.

The video camera can be any black and white camera which has standard sync. or colour video camera and can be selected depending on the environment in which the apparatus is to be used.

The analogue/video processor 14 multiplexes all inputs from the preamplifier, digitizes and stores them, and slots them into the video signal coming from the video camera 10. The manner of inserting the data from the preamplifier 12 into the video data from the video camera 10 in the processor 14 will be described in detail hereinafter.

An event marker 20 is provided with inputs to the processor 14 so that an observer (e.g. a parent, or nurse etc.) can mark any particular instant of the recording. Coupled to the processor 14 is an EEG machine 22 and an EEG waveform monitor 24 which can be used to monitor the EEG waveform as it is being recorded or to provide a hard copy of the EEG waveform during playback. A microphone 26 is coupled directly to a video cassette recorder 28 for recording any patient comments or sounds and also any commentary from parents or staff. The microphone is connected to one of the audio channels of the video cassette recorder. Since most video recorders have stereo sound tracks one channel can be used for commentary and the other for patient sounds. A time-of-day clock is provided to store time information in the recorded data so that it can be displayed during playback of the video and EEG data. The processor 14 which puts the EEG data into the

3

video data supplies a single stream of data into the video cassette recorder 28 for recording and for display on a video monitor 32. Upon playback of the data the data is separated so that the video data is applied to the video monitor 32 and the EEG data is applied to the EEG waveform monitor 24 and/or the EEG machine 22.

Hence, the recorded video signal, complete with EEG data, is recorded on a video cassette tape in the video cassette recorder 28. During playback the data is directed back into the processor 14 where the data and video are separated. The video is directed to the video monitor 32 and the data is directed to the EEG machine and the EEG waveform monitor 24. During playback the preamplifier 12, camera 10, event push button 20 and microphone 26 are not required, and if still connected, will be deactivated by the processor 14.

Any event which was marked with the push button 20 during record will be visible as a short duration symbol on the screen and as a pen deflection on an EEG chart produced by the EEG machine 22. A tone of short duration will also be heard from one of the sound tracks. Furthermore, during playback, the processor 14 extracts the time of day from the data and outputs it as a separate electrical signal. This signal can be connected to the EEG machine 22 so as to print the time on the EEG chart.

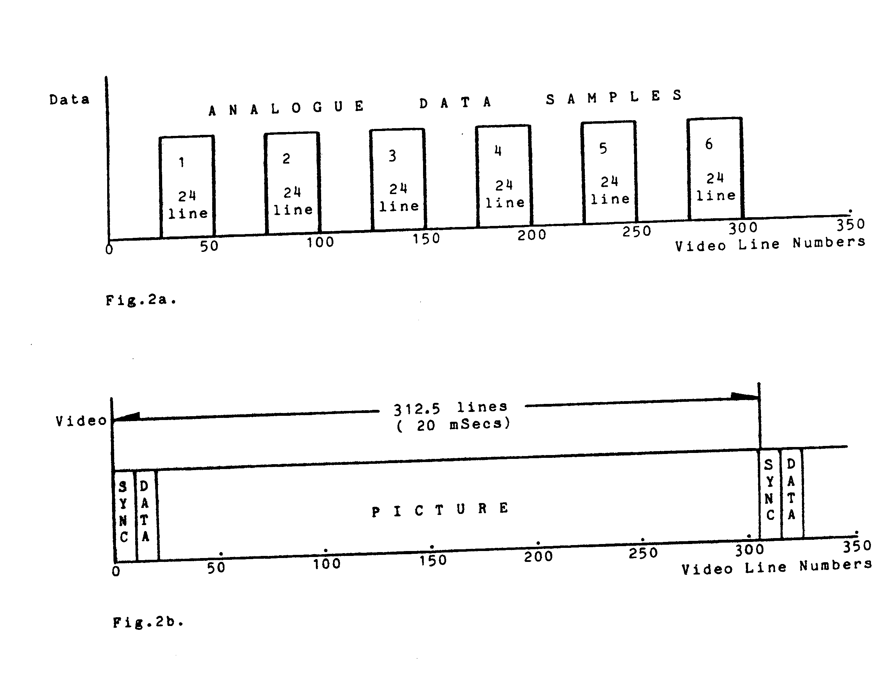

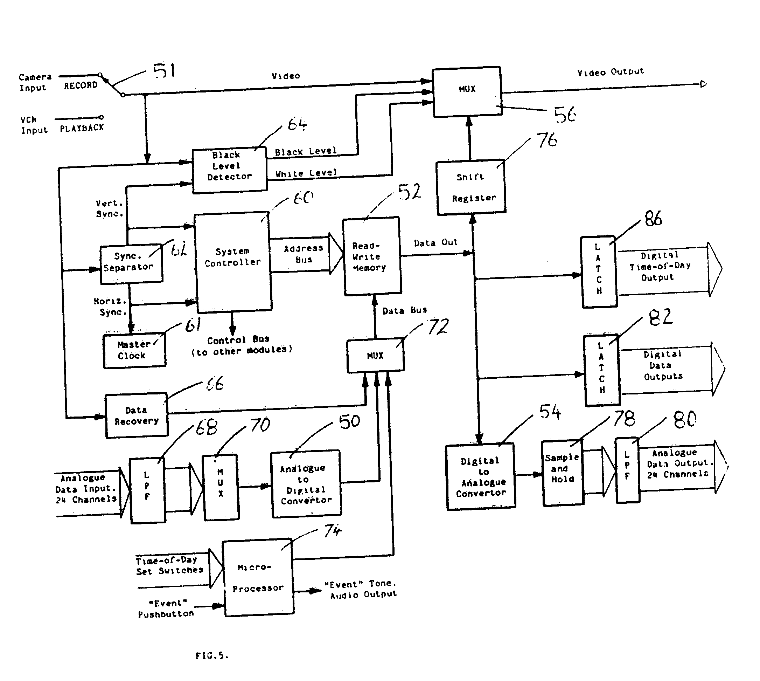

With reference to Figures 2a and 2b, in conjunction with Figure 5, each channel of data from the EEG preamplifier 12 is sampled at 300 Hz, digitized by an analogue to digital converter 50 and stored in a read/write memory 52. Sampling of the data from the preamplifier 12 occurs at regular intervals and at a rate of six times per television field. A field is the time between successive vertical synchronization pulses or the time taken by the raster to make one complete vertical scan of a television screen (video monitor 32). In the common television system with which this invention is used the picture is interlaced and hence there are two fields per frame, that is, a field rate of 50 Hz. Sampling is synchronized to the video signal and occurs on predefined lines. One sample is taken and digitized per line. Hence, it takes a full 24 lines to sample and digitize all 24 channels from the preamplifier 12. This 24 line sampling procedure is repeated at six equally spaced intervals throughout each field. The digital values of all samples taken during a television field are stored in the memory 52 until the beginning of the next field. The contents of the memory are then quickly read and inserted into the video signal from a video camera 10 between the field synchronizing pulses and the picture information. In the PAL television system there are 17 clear lines between field synchronizing pulses and the beginning of the picture. Digital words (representing the EEG data) from the memory are inserted at the rate of nine per video line. Hence the digital words for 24 channel per field, (i.e. a total of 144 words per field) require sixteen video lines. Figures 2a and 2b show the relationship between the data and picture.

It will be noted that only sixteen lines of the available seventeen lines are used for data. The sevententh line is used for the time-of-day clock. The digital version of the time in hours, minutes and seconds is stored on this final line before the picture. Hence, none of the data impinges upon the picture itself.

During playback, data is removed from the video signal, at the beginning of the frame, and stored in the read/write memory 52. Then at six equally spaced intervals, the same intervals as used for initial sampling of the analogue data, a complete set of 24 data words are read from memory 52 and processed to reconstruct 24 channels of analogue data for that instant in time. The processing consists essentially of digital-to-analogue conversion (DAC) followed by a sample-and-hold operation and appropriate filtering.

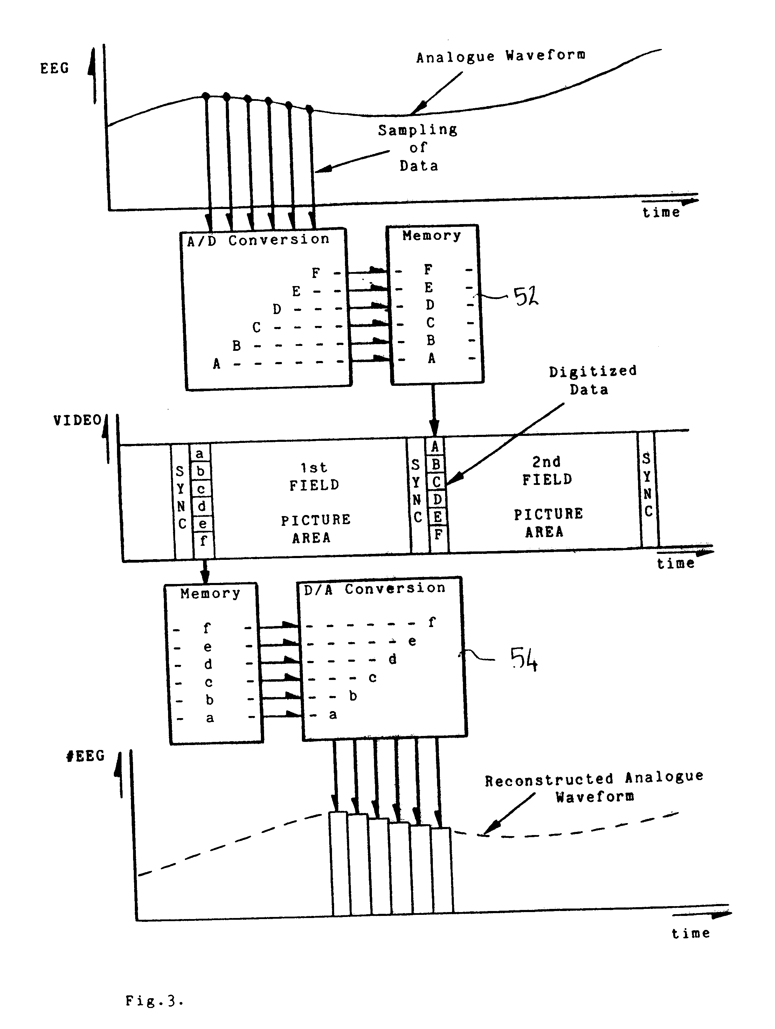

A very much simplified outline of one channel of the above signal processing within the analogue/video processor is given in Figure 3. Here six successive samples (A, B......F) of an analogue waveform, EEG, are shown undergoing the process of filtering and analogue-to-digital conversion (ADC), storage and integration into a video signal. A different six samples (a, b......f) from the preceding video field, are also shown as they are stored and converted back into a reconstructed version of the analogue waveform. The reconstructed waveform is smoothed by a low-pass filter, to achieve the continuous version of the original, shown as a dotted graph and designated #EEG.

The six EEG samples are converted, in the ADC 50, into binary numbers, A, B, C, D, E and F, each of which represents the height of the analogue waveform, at the corresponding instants in time. These binary numbers are then stored in a digital memory i.e. memory 52 until the incoming video signal reaches the beginning of the next field, whereupon, all six binary numbers, in a pulse code modulated form, are inserted into the video signal. They are inserted between the field synchronizing pulses and the first line of picture information.

The lower half of the diagram depicts the playback procedure. Here six sets of data pulses a, b, c, d, e, and f are extracted from the video, stored in the read/write memory 52 and output at a constant rate via a digital-to-analogue conversion (DAC) 54, to produce a series of voltage steps corresponding to the values of each sample. These steps are then low-pass filtered to produce the smooth output waveform, #EEG.

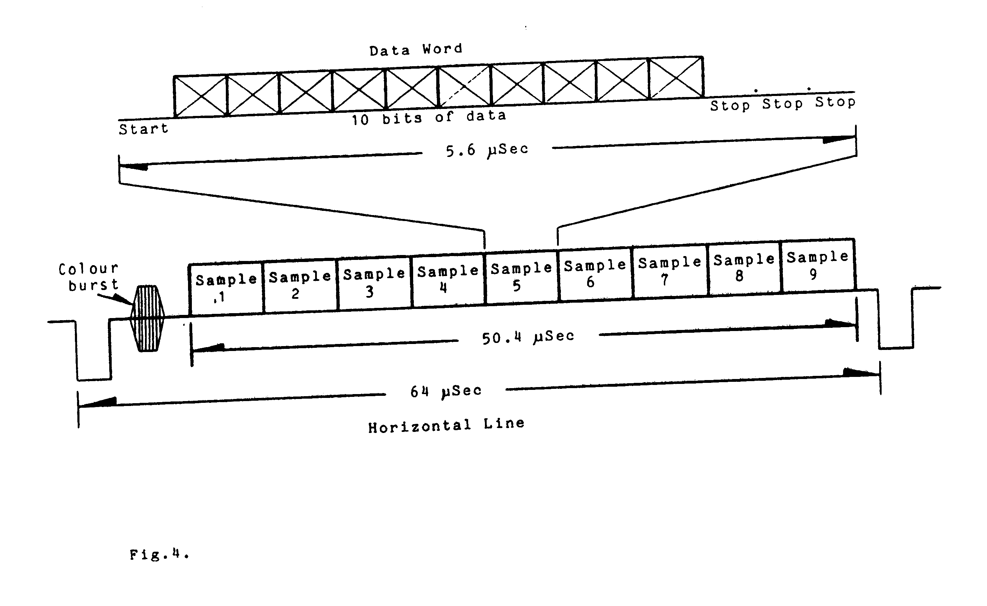

The basic structure of a data line and details of a data word are depicted in Figure 4. There are nine words per video line, all nine of which are arranged in a single block of data, and positioned so that they do not interfere with either colour burst of line synchronization. Each data word is 14 bits long and consist of:

| | | | |
|---|---|---|---|
| Data Bits | 10 | 4000 | nSecs |
| Start Bits | 1 | 400 | nSecs |
| Stop Bits | 3 | 1200 | nSecs |
| | — | — | |
| Total | 14 | 5600 | nSecs |
| | — | — | |

Each bit is 400 nSecs wide. The total time for 9 digitized samples, each of 14 bits, is therefore 50.4 uSecs. As can be seen from the diagram, this block of data fits quite comfortably onto a standard video line, which is 64 uSec long.

A block diagram of the entire analogue/video processor is depicted in Figure 5. As its operation in PLAYBACK is quite different from that in RECORD, each mode shall be described separately.

(a) Record:

The video input signal, during Record, is derived from the output of video camera 10, and output via a multiplexer (MUX) 56 to the video cassette recorder 28.. For most of the time the multiplexer 56 passes the video camera signal directly to the cassette recorder 28 (Video Output), however for 17 data lines at the beginning of each field, the MUX 56 inserts data in the form of pulses at either the black or white level. The position and width of the pulses is under the control of System Controller 60. The black and white levels are derived from the video input signal itself, with the aid of vertical synchronizing information. Hence data pulse amplitudes are compatible with picture levels.

Vertical and horizontal synchronizing pulses are stripped from the incoming video signal and separated into two separate pulse trains in the sync. separator module 62. The vertical pulses being used to assist in the accurate determination of the black level of the incoming signal, in black level detector 64 and the horizontal pulses being used to control a master clock 61. All timing and clock signals within the analogue/video processor emanate from the master clock 61 and are frequency-locked to the horizontal synchronizing pulses of the incoming video signal. The master clock also contains a divider chain, to give the wide range of different frequencies demanded by the system modules.

In addition, both horizontal and vertical synchronization pulses are used by the system controller 60 to ensure accurate location of the data. The vertical sync. enables the controller to locate lines 6 and 319, the starting lines for data storage and be able to identify each line thereafter. The horizontal sync. on the other hand, permits the system controller to count the 17 data lines following the selected starting lines. Hence, data is stored on lines 6 to 22 and 319 to 335 inclusive, that is, on 17 lines per field.

The described embodiment relates to PAL television system. Other lines will be used in other systems an in some embodiments it may be necessary or desired for the video data and EEG data to overlap. The video data and EEG data is to overlap some of the video data (i.e. the first 20 lines of the video data can be dispensed with to make way for the EEG data). This may result in a small black portion at the top of the picture fields in which the overlapped EEG data is included. The small block portion will not be detrimental to the obtained picture information.

The incoming video signal is also presented to a data recovery module 66, which undertakes the extraction of the data upon playback. This module is rendered inoperative during record, by the system controller 60.

The 20 channels of EEG data and the 4 auxiliary data channels, following suitable amplification and signal conditioning, are bandlimited by a 75 Hz, 6 pole, lowpass filter 68. The resulting analogue signals are time division multiplexed, at a sample rate of 300 Hz, by an analogue multiplexer (MUX) 70, and digitized, at the same rate by the analogue-to-digital converter (ADC) 50. Both the MUX 70 and ADC 50 modules are under the control of the system controller 60.

The digitized data samples, from the ADC are then time division mutiplexed, together with the "Time-of-Day" and "Event" data by a digital multiplexer (MUX) 72. the time-of-day signals are acquired and controlled by a separate microprocessor 74 which creates a digital code for the time-of-day and event signals and an audio tine (suitable for applying to the audio track of the video tape recorder) at the instant of operation of the event pushbutton. All digitized data (i.e. physiological, time-of-day and event data) generated during a video field, is stored in the read/write memory 52 until the incoming video signal reaches the beginning of the next field, whereupon the system controller 60 directs the memory 52 to quickly transfer all stored data to a shift register 76, which converts the parallel data memory output, into a serial bit stream. The serial data being used to insert either black or white level pulses into the video signal. This insertion is performed in the video multiplexer 56 under the control of the system controller 60.

While data is being directed to the shift register, it is also made available, for monitoring purposes, to the operator in a number of different forms:
- a parallel digital output of the physiological data, specifically intended as a data source for computer analysis,
- a parallel digital output of the time-of-day, to enable the time-of-day to be printed onto the EEG chart together with the EEG waveforms themselves,
- an analogue output of all 24 channels for direct connection to the EEG machine 22 and/or a physiological waveform monitor 24.

Each of these outputs is continuous, any relative shift in data samples due to the storage technique, having been removed.

The analogue outputs are derived from the parallel data memory output, using standard digital-to-analogue conversion (DAC) and sample-and-hold techniques in DAC 54 and sample and hold module 78. The resultant reconstructed analogue waveforms being low-pass filtered in filter 80 and 75 Hz before being made available for external use.

(b) Playback:

Many of the operations of system modules during playback are similar to those employed during record. For example the data output modules for both digital and analogue data operate in an identical manner, as does the sync. separator 62, master clock 61 and black level detector 24. However there are also some notable exceptions, which deserve discussion.

During playback the video input originates from the video cassette recorder 28 via switch 51 which is switched to the VCR input and passes directly through the video multiplexer (MUX) 56 to the video output connector and on to the video monitor 32. The sync. separator removes and separates the synchronization pluses into vertical and horizontal sync. pulses and distributes them to the master clock 61, system controller 60 and black level detector 64. The black level detector 64 outputs are used to establish data threshold levels and the system controller 60 operates with a special playback program.

The bursts of data at the beginning of each video field are stripped from the video signal by the data recovery module 66, and stored in the read/write memory 52. The time-of-day microprocessor 24 and the input ADC 50 are rendered inoperative by the system controller 60. It is only the data from the data recovery module 66 which is stored in the memory 52.

Once the data is extracted from the tape in cassette recorder 28 and stored in memory 52, it is released to the output modules at a constant rate, under control of the system processor 60, such that the analogue output waveforms are generated from equally spaced samples, which are filtered by the low-pass filter 80 to give a smooth EEG output waveform. A latched digital version of the EEG signal is provided simultaneously at the parallel digital data output via latch 82.

The time-of-day information, which has been stored on the tape as data is also transferred to the read/write memory 52 upon PLAYBACK. Upon direction from the system controller 60 the time is transferred to an output latch 86 where it is held for use by an external EEG machine.

The preferred embodiment of this invention provides an apparatus which can record signals from separate sources, such as biological signals and video signals, without lose of synchronization and can play back those signals at will to enable the video information to be viewed on a video monitor and the biological data to be displayed on suitable machines such as EEG machines and waveform monitors. Since a single recording medium is used the device is relatively inexpensive to produce and is simple to operate.

Since modification within the spirit and scope of the invention may readily be effected by persons skilled within the art, it is to be understood that this invention is not limited to the particular embodiment described by way of example hereinabove.

**Claims**

1. A system for recording analogue information together with picture information received from separate sources, comprising a processor (14) for receiving the picture information from a video camera (10) and for receiving said analogue information, characterized by said processor (14) having means (52, 56, 60) for combining said picture information and analogue information into a single stream of data with said analogue information being located between picture frames of said picture information, output means (56) for outputting said single stream of data to a recorder (28) for recording said single stream of data on a recording medium, receiving means (66) for receiving said single stream of data from the recorder and for separating said analogue information from said single stream of data and second and third outputting means (56, 78, 80, 82, 86) for outputting said picture information to a video monitor (32) and for outputting said analogue information to an analogue recorder or display (22, 24) respectively.

2. A system according to Claim 1, wherein said combining means and outputting means (52, 56, 60) comprises a multiplexer (56) for receiving the picture information, a memory (52) for receiving said analogue information and a system controller (60) for synchronizing the output of said analogue information inserted between picture frames relates to the video information contained in the picture frames.

3. A system according to Claim 2, wherein said analogue information is converted in an analogue to digital converter (50) into a digital stream of data before being received by said memory (52).

4. A system according to Claim 1, wherein said receiving means (66) includes a data recovery means (66) for removing said analogue information from said single stream of data and for applying said analogue information to a memory (52), a system controller (60) for causing said memory to output said analogue information to said third output means (80, 82, 86) in synchronism with said picture information being applied to said second output means (56).

5. A system according to Claim 4, wherein said second output means (56) is a multiplexer (56) and said third output means (80, 82, 86) is a sample and hold circuit (78) and/or a plurality of digital outputs (80, 82, 86).

6. A system according to Claim 4, wherein said analogue information is analogue to digital converted in an analogue to digital converter (50) before being inserted into said picture information and is digital to analogue converted in a digital to analogue converter (54) after being recovered from said single stream of data and before being applied to said sample and hold circuit (78).

7. A system according to Claim 1, wherein some of said analogue information is also inserted onto lines of said picture frame which contains video information.

8. A method of recording analogue information together with picture information received from separate sources, caracterized by the steps of combining (52, 56, 60) the picture information and analogue information into a single stream of data with said analogue information being located between picture frames of said picture information, recording (28) said single stream of data on a recording medium for storage, receiving said single stream of data from said recording medium and separating (66) the analogue information from said single stream of data and applying the analogue information to an analogue recorder or display (22, 24) and the picture information to a video monitor (28).

9. A method according to Claim 8, wherein said digital picture information is applied to said video monitor in said single stream of data.

10. A system for recording and retrieving two signals from different sources comprising means for combining (52, 56, 60) the two signals into a single stream of data, means for outputting (56) the single stream of data to a recorder where the single stream of data is recorded on a recording medium (28), means (66) for receiving the single stream of data from the recording medium (28) and means (66) for separating at least one of the signals from the single stream of data so that the said one of the signals can be applied to a recorder or display (22, 24) and the other of the signals can be applied to another recorder or display (32).

11. A diagnostic system for use in diagnosing a patient, characterized by said system comprising a processor (14) for receiving biological information in the form of an analogue signal from the patient and for receiving video information of the patient from a video camera (10), means (52, 56, 60) for combining the biological analogue signals and the video signals into a single stream of data, recording means (28) for recording the single stream of data on a recording medium, recovery means (66) for receiving the single stream of data from the recording means and for separating the biological analogue signal from the single stream of data, an analogue recorder or display (22, 24) for recording the analogue information separated from the single stream of data and a video monitor (32) for receiving said video information and for displaying that information.

VIDEO CASSETTE RECORDER — 28

VIDEO MONITOR — 32

EEG WAVEFORM MONITOR — 24

EEG MACHINE — 22

Microphone — 26

ANALOGUE/VIDEO PROCESSOR — 14

Time-of-day Output — 86

Computer Output — 82

EEG PRE-AMPLIFIER — 12

VIDEO CAMERA — 10

EVENT PUSHBUTTON — 20

PATIENT

16

fig.1.

Fig.2a.

Fig.2b.

Fig.3.

Data Word

Start    10 bits of data    Stop Stop Stop

|← 5.6 μSec →|

Colour burst

| Sample 1 | Sample 2 | Sample 3 | Sample 4 | Sample 5 | Sample 6 | Sample 7 | Sample 8 | Sample 9 |

|← 50.4 μSec →|

|← 64 μSec →|

Horizontal Line

Fig.4.

FIG.5.